# FASCICULE DE BREVET EUROPEEN

(11) **EP 1 437 242 B1**
(45) Date de publication et mention de la délivrance du brevet: **10.11.2010**
(21) Numéro de dépôt: 04290035.7
(22) Date de dépôt: 07.01.2004
(51) Int. Cl.: B60G 11/30, B60G 21/073

(54) **Dispositif de suspension hydraulique**
Hydraulische Aufhängungsvorrichtung
Hydraulic suspension system

(30) Priorité: 08.01.2003 FR 0300145
(43) Date de publication de la demande: 14.07.2004
(73) Titulaire: Peugeot Citroën Automobiles S.A., 78140 Vélizy Villacoublay (FR)
(72) Inventeur: Abadie, Vincent, 78500 Sartrouville (FR); Nouillant, Michel, 33400 Talence (FR); Oustaloup, Alain, 33400 Talence (FR); Moreau, Xavier, 33910 Saint Ciers D'Abzac (FR)

(56) Documents cités:
- FR-A- 2 436 030
- FR-A- 2 660 386
- FR-A- 2 692 846
- GB-A- 1 113 801

## Description

L'invention concerne en général les véhicules automobiles et les dispositifs de suspension pour ces véhicules.

Plus précisément, l'invention concerne un véhicule automobile comprenant deux roues avant et deux roues arrière montées sur des supports de roues respectifs, une caisse, et un dispositif de suspension oléopneumatique interposé entre les supports de roue et la caisse, ce dispositif transmettant un effort à la caisse en réponse aux sollicitations subies par les roues, le dispositif de suspension comprenant pour chaque roue d'au moins un essieu un vérin, une pluralité d'accumulateurs oléopneumatiques d'élasticités respectives mutuellement différentes, et une pluralité de dispositifs d'amortissement de capacités d'amortissement respectives mutuellement différentes, chacun associé à un accumulateur et interposé entre ledit accumulateur et le vérin , ce vérin comprenant une chambre et un piston lié au support de roue se déplaçant dans la chambre, la chambre étant hydrauliquement reliée à chacun des accumulateurs à travers les dispositifs d'amortissement.

Des dispositifs de suspension du type décrit ci-dessus sont connus de l'art antérieur, et notamment par le document de brevet FR 2 660 386, qui révèle un générateur d'effort théorique comprenant un vérin et un nombre N d'accumulateurs oléopneumatiques associés chacun à un dispositif d'amortissement. Les coefficients d'élasticité des N accumulateurs, linéarisés autour du point de fonctionnement, sont tous différents et forment une suite géométrique prenant les valeurs k, k η, k η², ..., k η^{N-1}, η étant un coefficient supérieur à 1. Les dispositifs d'amortissement sont des trous calibrés tous différents, les coefficients de frottement visqueux résultant du laminage du fluide au travers des trous calibrés formant également une suite géométrique prenant les valeurs c, c/α, c/α², ..., c/α^{N-1}, α étant un coefficient supérieur à 1.

Pour réaliser une suspension de véhicule automobile, on interposerait un générateur d'effort de ce type entre chaque support de roue et la caisse. Ce dispositif permettrait d'encaisser de façon idéale n'importe quelle sollicitation sur les roues. Les N paires accumulateur/trou calibré présentent des caractéristiques raideur/capacité d'amortissement distinctes et présentent des lois d'amortissement qui se superposent et permettent de traiter de façon théoriquement idéale tous les chocs, quelles que soient leur amplitude et leur fréquence.

Ce dispositif théorique idéal est malheureusement difficile à réaliser pratiquement. Un amortissement parfait nécessite la mise en oeuvre d'un grand nombre d'accumulateurs, incompatible avec l'espace disponible à bord d'un véhicule. Par ailleurs, le coût d'un tel dispositif serait très important.

Pour s'affranchir de ces défauts, le document de brevet FR 2 660 386 propose de remplacer les N accumulateurs par un dispositif plus simple, comprenant un actionneur, par exemple un accumulateur couplé à un trou calibré de capacité d'amortissement variable et un calculateur permettant de piloter la capacité d'amortissement du trou calibré.

Ce dispositif, plus compact que les N accumulateurs, reste néanmoins complexe et coûteux.

Dans ce contexte, la présente invention a pour but de pallier les défauts mentionnés ci-dessus et de proposer un véhicule équipé d'un dispositif de suspension simple, compact, répondant de façon différenciée et adéquate aux principaux types de sollicitations subies par les roues.

A cette fin, le dispositif de l'invention, par ailleurs conforme à la définition générique qu'en donne le préambule ci-dessus, est essentiellement caractérisé en ce que le dispositif de suspension comprend de deux à quatre accumulateurs par roue dudit essieu, les élasticités de ces accumulateurs et les capacités d'amortissement des dispositifs d'amortissement associés audits accumulateurs étant choisies de façon à permettre l'auto-adaptation de la réponse du dispositif de suspension en fonction du type de sollicitation subie par les roues, sans nécessiter l'intervention de moyens de commande électroniques.

Dans un mode de réalisation possible de l'invention, le dispositif de suspension comprend trois accumulateurs par roue.

Avantageusement, le dispositif de suspension comprend pour chaque roue des premier, deuxième et troisième accumulateurs associés à des premier, deuxième et troisième dispositifs d'amortissement, les deuxième et troisième accumulateurs et les deuxième et troisième dispositifs d'amortissement des deux roues de l'essieu étant communs.

De préférence, les premier, deuxième et troisième accumulateurs d'une même roue présentent respectivement des première, deuxième et troisième élasticités croissantes dans cet ordre, les capacités d'amortissement des premier, deuxième et troisième dispositifs d'amortissement d'une même roue étant croissantes dans cet ordre.

Par exemple, le dispositif de suspension comprend pour chaque roue un quatrième dispositif d'amortissement interposé entre le vérin et les deuxième et troisième dispositifs d'amortissement.

Avantageusement, le quatrième dispositif d'amortissement présente une capacité d'amortissement inférieure à la capacité d'amortissement du deuxième dispositif d'amortissement et supérieure à la capacité d'amortissement du premier dispositif d'amortissement.

De préférence, les chambres des vérins des deux roues de l'essieu sont mises en communication par un conduit traversant les quatrièmes dispositifs d'amortissement.

Par exemple, les deuxième et troisième accumulateurs des roues de l'essieu sont respectivement raccordés à des points de connexion dudit conduit à travers les deuxième et troisième dispositifs d'amortissement, ces points de connexion étant disposés entre les quatrièmes dispositifs d'amortissement traversés par ledit conduit.

Avantageusement, le dispositif d'amortissement comprend sur le conduit un premier organe d'isolement disposé entre les points de connexion, ce premier organe d'isolement permettant sélectivement de mettre en communication ou d'isoler les chambres des vérins des roues avant ou arrière l'une de l'autre.

De préférence, le dispositif d'amortissement comprend sur le conduit deux seconds organes d'isolement sélectifs, disposés aux deux extrémités opposées du conduit, entre les points de connexion et les vérins.

Par exemple, le dispositif d'amortissement comprend deux troisièmes organes d'isolement sélectifs disposés respectivement entre les deuxième et troisième dispositifs d'amortissement et les points de connexion sur le conduit correspondant.

D'autres caractéristiques et avantages de l'invention ressortiront clairement de la description qui en est faite ci-dessous, à titre indicatif et nullement limitatif, en référence aux figures annexées, parmi lesquelles :
- les figures 1A et 1B sont des schémas de principe du dispositif de suspension respectivement des roues avant et arrière du véhicule selon l'invention,
- la figure 2 est une vue similaire à la figure 1A, pour une première variante de réalisation,
- la figure 3 est une vue similaire à la figure 1A, pour une deuxième variante de réalisation,
- la figure 4 est une vue similaire à la figure 1A, pour une troisième variante de réalisation.

L'invention vise un véhicule comprenant, de façon connue, deux roues avant 10A et deux roues arrière 10R montées sur des supports de roues respectifs 11, une caisse, et un dispositif de suspension oléopneumatique 13 interposé entre les supports de roue 11 et la caisse.

Ce dispositif transmet un effort à la caisse en réponse aux sollicitations subies par les roues 10A et 10R quand le véhicule roule sur une route.

Le dispositif de suspension 13 comprend pour chaque roue un vérin 20, une pluralité d'accumulateurs oléopneumatiques d'élasticités respectives mutuellement différentes, et une pluralité de dispositifs d'amortissement de capacités d'amortissement respectives mutuellement différentes.

Chaque dispositif d'amortissement est associé à un accumulateur et interposé entre ledit accumulateur et le vérin 20.

Le vérin 20 comprend un cylindre définissant une chambre 21 et un piston 22 se déplaçant dans la chambre 21. Le piston 22 est lié au support de roue 11 et se déplace en fonction des sollicitations subies par la roue à laquelle il est associé.

La chambre 21 est hydrauliquement reliée à chacun des accumulateurs à travers les dispositifs d'amortissement associés à ces accumulateurs.

Les accumulateurs sont des enveloppes rigides, sphériques ou non, présentant un volume intérieur divisé par une membrane flexible 34 en une chambre fermée 35 contenant un gaz et une chambre ouverte 36 communiquant avec la chambre 21 du vérin 20.

La chambre fermée 35 est remplie de gaz, typiquement d'azote.

Un liquide, typiquement un fluide huileux, circule entre la chambre 21 du vérin 20 et la chambre ouverte 36 de l'accumulateur 30.

Les dispositifs d'amortissement sont par exemple des orifices calibrés créant une perte de charge pour le liquide circulant entre le vérin 20 et l'accumulateur. Ces orifices sont typiquement équipés de clapets élastiques.

Les sollicitations subies par les roues 10A et 10R entraînent un déplacement du piston 22 du vérin 20, celui-ci chassant alors le liquide vers la chambre ouverte 36 de l'accumulateur ou au contraire pompant le liquide vers la chambre 21 du vérin 20.

Le liquide est laminé lors de son passage à travers le dispositif d'amortissement, ce qui provoque le phénomène d'amortissement. Dans le cas où le dispositif d'amortissement est un orifice calibré, la capacité d'amortissement de ce dispositif est principalement fonction de la taille de l'orifice.

L'accumulateur joue le rôle de ressort pneumatique. Son élasticité est principalement fonction de la pression de gaz au repos dans la chambre fermée 35, c'est-à-dire de la pression de gaz quand la chambre ouverte 36 est à la pression atmosphérique. Pendant le fonctionnement du dispositif de suspension, les pressions respectives des chambres fermées et ouvertes 35 et 36 sont constamment à l'équilibre. Le déplacement du piston 22 entraîne une variation dans la pression de la chambre ouverte 36 et un déplacement de la membrane élastique 34, comprimant ou détendant le gaz de la chambre fermée 35.

Le ressort pneumatique constitué par l'accumulateur est plus relativement raide quand la pression au repos dans la chambre fermée 35 est relativement plus faible, et relativement plus souple quand la pression au repos est relativement plus forte.

Selon l'invention, le dispositif de suspension 13 comprend de deux à quatre accumulateurs par roue 10A et 10R, les pressions de gaz de ces accumulateurs et les capacités d'amortissement des dispositifs d'amortissement associés audits accumulateurs étant choisies de façon à permettre l'auto-adaptation de la réponse du dispositif de suspension 13 en fonction du type de sollicitation subie par les roues, sans nécessiter l'intervention de moyens de commande électroniques.

Deux à quatre paires accumulateurs/dispositifs d'amortissement, présentant des lois de réponse différentes aux sollicitations subies par la roue, qui se superposent, sont suffisantes pour conférer au dispositif de suspension 13 un comportement satisfaisant.

Dans le mode de réalisation de l'invention décrit ci-dessous, le dispositif de suspension 13 comprend trois accumulateurs par roue 10A et 10R.

Plus précisément, le dispositif de suspension 13 comprend pour chaque roue 10A et 10R des premier, deuxième et troisième accumulateurs 31, 32 et 33 associés à des premier, deuxième et troisième dispositifs d'amortissement, respectivement 41, 42 et 43.

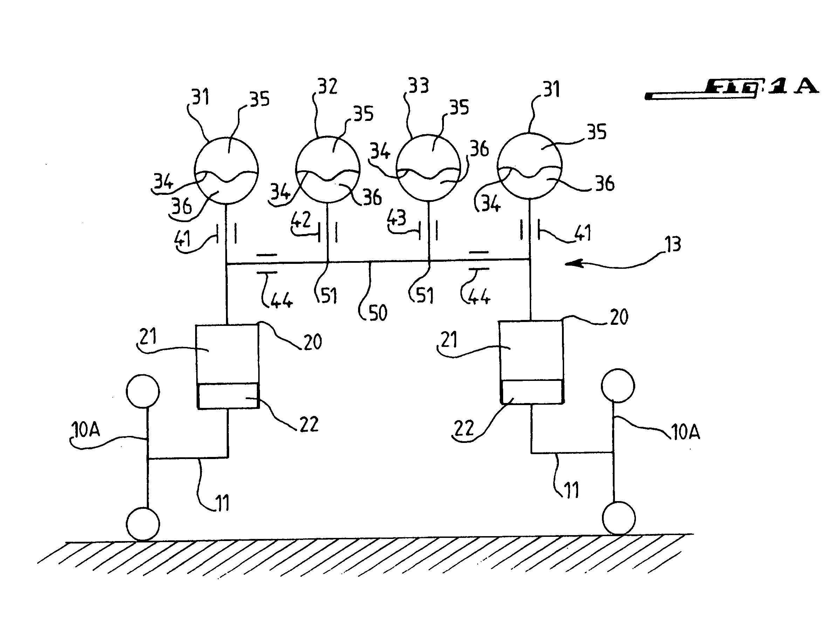

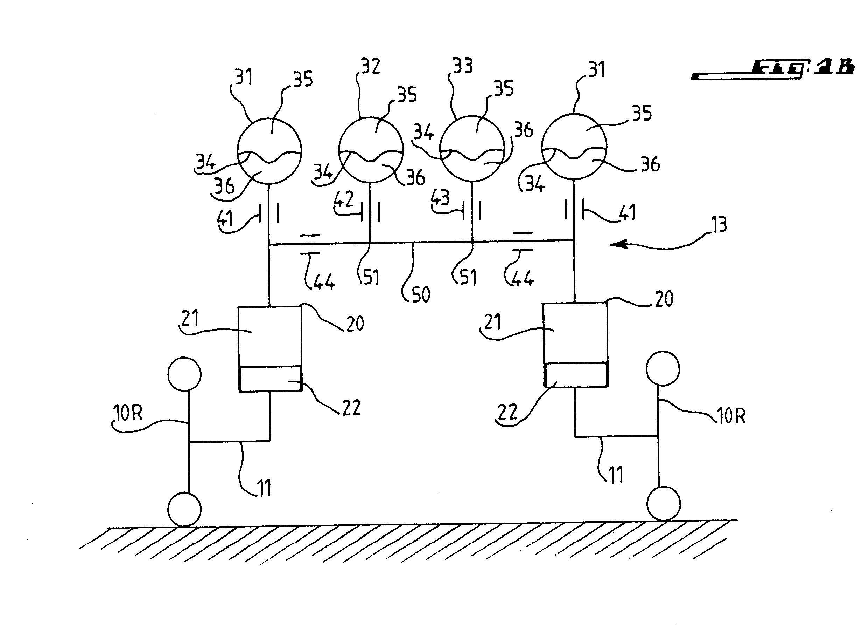

Comme le montrent les figures 1A et 1B, les deuxième et troisième accumulateurs 32 et 33 et les deuxième et troisième dispositifs d'amortissement 42 et 43 des deux roues avant 10A sont communs à ces deux roues avant 10A.

De même, les deuxième et troisième accumulateurs 32 et 33 et les deuxième et troisième dispositifs d'amortissement 42 et 43 des deux roues arrière 10R sont communs à ces deux roues arrière 10R.

Le dispositif de suspension 13 comprend donc quatre accumulateurs seulement à l'avant, et quatre accumulateurs seulement à l'arrière.

Les premier, deuxième et troisième accumulateurs 31, 32 et 33 d'une même roue sont gonflés au repos respectivement à des première, deuxième et troisième pressions P1, P2 et P3 croissantes dans cet ordre.

Les capacités d'amortissement des premier, deuxième et troisième dispositifs d'amortissement 41, 42 et 43 d'une même roue sont également croissantes dans cet ordre.

On associe donc au sein du dispositif de suspension 13 l'accumulateur le plus raide avec le dispositif d'amortissement de capacité d'amortissement la plus faible, et l'accumulateur le plus souple avec le dispositif d'amortissement de capacité d'amortissement la plus forte.

Le deuxième accumulateur 32 présente une élasticité moyenne, correspondant à l'élasticité typique des ressorts installés en série sur des véhicules ne comprenant qu'un ressort par roue. De même, le deuxième dispositif amortisseur 42 présente une capacité d'amortissement moyenne, correspondant à la capacité d'amortissement typique des amortisseurs installés en série sur des véhicules ne comprenant qu'un dispositif amortisseur par roue.

Par ailleurs, le dispositif de suspension 13 comprend pour chaque roue 10A et 10R un quatrième dispositif d'amortissement 44 interposé entre le vérin 20 et les deuxième et troisième dispositifs d'amortissement 42 et 43.

Ce quatrième dispositif d'amortissement 44 présente une capacité d'amortissement inférieure à la capacité d'amortissement du deuxième dispositif d'amortissement 42 et supérieure à la capacité d'amortissement du premier dispositif d'amortissement 41.

Comme le montrent les figures 1A et 1B, les chambres 21 des vérins 20 des deux roues avant 10A sont mises en communication par un conduit 50. Ce conduit 50 débouche, à chacune de ses deux extrémités opposées, entre la chambre 21 du vérin 20 et le premier dispositif d'amortissement 41 d'une des deux roues avant 10A.

Par ailleurs, le conduit 50 traverse les deux quatrièmes dispositifs d'amortissement 44 des deux roues avant 10A.

Les deuxième et troisième accumulateurs 32 et 33, communs aux deux roues avant 10A, sont raccordés à des points de connexion 51 respectifs du conduit 50 à travers les deuxième et troisième dispositifs d'amortissement 42 et 43. Ces points de connexion 51 sont disposés, le long du conduit 50, entre les deux quatrièmes dispositifs d'amortissement 44 traversés par ledit conduit.

Les chambres 21 des vérins 20 des deux roues arrière 10R sont mises en communication d'une façon exactement identique, qui ne sera donc pas décrite en détail. Les deuxième et troisième accumulateurs 42 et 43 communs aux deux roues arrière 10R sont agencés de la même façon qu'à l'avant, qui ne sera pas non plus décrite en détail.

On va maintenant détailler le fonctionnement du dispositif de suspension pour les principaux types de sollicitations subies par les roues.

Ces sollicitations peuvent être rangées dans trois grandes catégories.

La première catégorie correspond à une route déformée, présentant des ondulations douces, de faible amplitude et de profil très aplati. Les roues subissent alors une sollicitation de faible fréquence, se traduisant par un faible débit de liquide et une faible pression dans le dispositif de suspension 13.

La deuxième catégorie correspond à un choc brutal sur les roues, du type nid de poule abordé à grande vitesse par le véhicule. Les roues subissent alors une sollicitation de haute fréquence, se traduisant par un débit de liquide et une pression importante dans le dispositif de suspension 13.

La troisième catégorie correspond à une route dégradée, présentant de multiples aspérités de petites tailles. Les roues subissent alors une sollicitation pouvant se décomposer en une composante de faible fréquence dite porteuse, similaire à la sollicitation de la première catégorie, et une composante de fréquence plus importante, dite "harmonique", correspondant à des ondulations de la route plus marquées.

Pour la première catégorie de sollicitations, le liquide déplacé par le piston 22 se dirigera vers le troisième accumulateur 33 et sera donc amorti fortement par le troisième dispositif d'amortissement 43. Le faible débit de liquide rend possible le laminage à travers le troisième dispositif d'amortissement 43. La faible pression fait que le liquide ne peut pas agir de façon significative sur les premier et deuxième accumulateurs 31 et 32, plus raides, mais peut comprimer le gaz du troisième accumulateur 33, plus souple. Les ondulations douces de la route sont donc fortement amorties par le dispositif de suspension 13.

Au contraire, pour la seconde catégorie de sollicitations, le liquide déplacé par le piston 22 se dirigera vers le premier accumulateur 31 et sera donc amorti faiblement par le premier dispositif d'amortissement 41. Le fort débit de liquide ne permet pratiquement pas le laminage du fluide à travers le quatrième dispositif d'amortissement 44. Le choc est donc sous-amorti, ce qui permet un bon confort des passagers dans l'habitacle. En effet, pour ce type de sollicitation, les passagers sont surtout incommodés par l'amortissement, plus que par le choc lui-même.

Pour le troisième type de sollicitation, le liquide se dirigera, en fonction des fréquences, soit vers les premier et deuxième accumulateurs 31 et 32, soit seulement vers le deuxième accumulateur 32, soit vers les deuxième et troisième accumulateurs 32 et 33. Le comportement de la suspension est intermédiaire.

On notera par ailleurs que les liaisons transversales entre les deux roues avant et les deux roues arrière permettent de gérer les phénomènes de roulis.

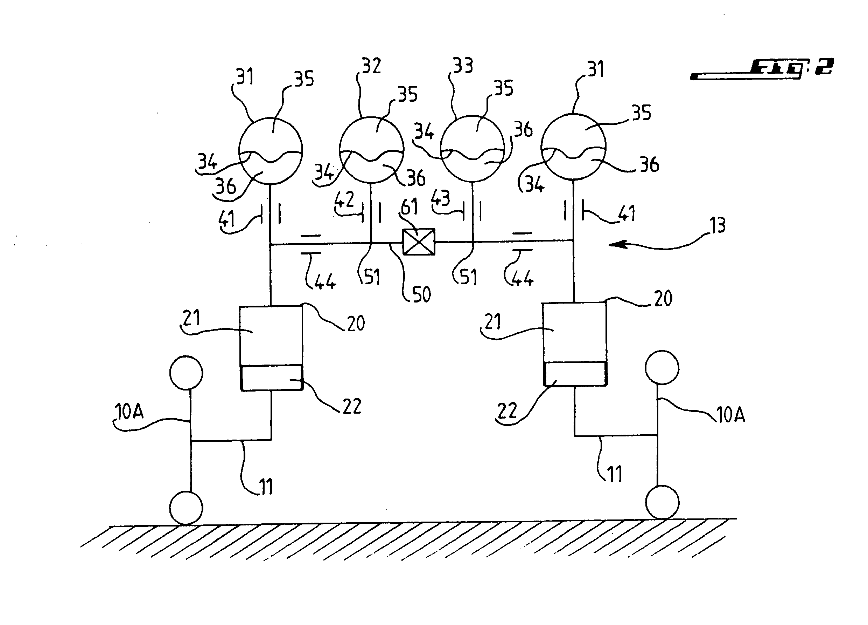

Plusieurs variantes de réalisation sont représentées sur les figures 2 à 4.

Dans la variante de la figure 2, le dispositif d'amortissement 13 comprend, sur les conduits 50 avant et arrière, un premier organe d'isolement 61 disposé entre les points de connexion 51 des deuxième et troisième accumulateurs 32 et 33.

Ce premier organe d'isolement 61 permet sélectivement de mettre en communication ou d'isoler les chambres 21 des vérins 20 des roues avant 10A ou arrière 10R l'une de l'autre en coupant le conduit 50.

Ce premier organe d'isolement est par exemple une électrovanne tout ou rien.

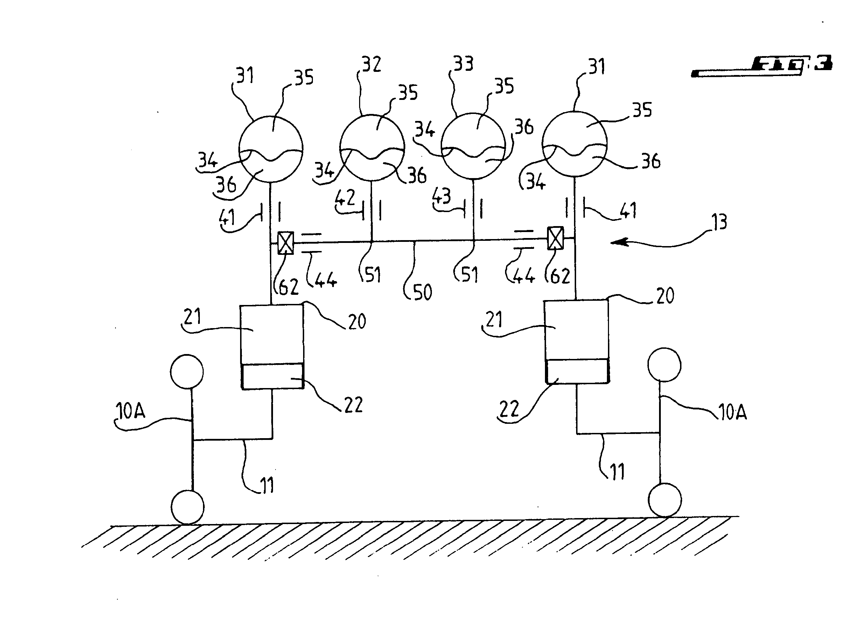

Dans la variante de la figure 3, le dispositif d'amortissement 13 comprend sur chaque conduit 50, avant et arrière, deux seconds organes d'isolement sélectifs 62, disposés aux deux extrémités opposées du conduit 50, entre les points de connexion 51 et les vérins 20.

Ils permettent sélectivement de mettre en communication les deuxième et troisième accumulateurs 32 et 33 avec les vérins 20 des roues avant 10A ou arrière 10R, ou d'isoler les deuxième et troisième accumulateurs 32 et 33 des vérins 20 des roues avant 10A ou arrière 10R.

Ils permettent également d'isoler les deuxième et troisième accumulateurs 32 et 33 du vérin 20 de l'une des deux roues, l'autre restant en communication avec les accumulateurs. Dans ce cas, seule une des deux roues bénéficie de l'effet auto-adaptatif du dispositif de suspension 13.

Ces seconds organes d'isolement 62 sont par exemple des électrovannes tout ou rien.

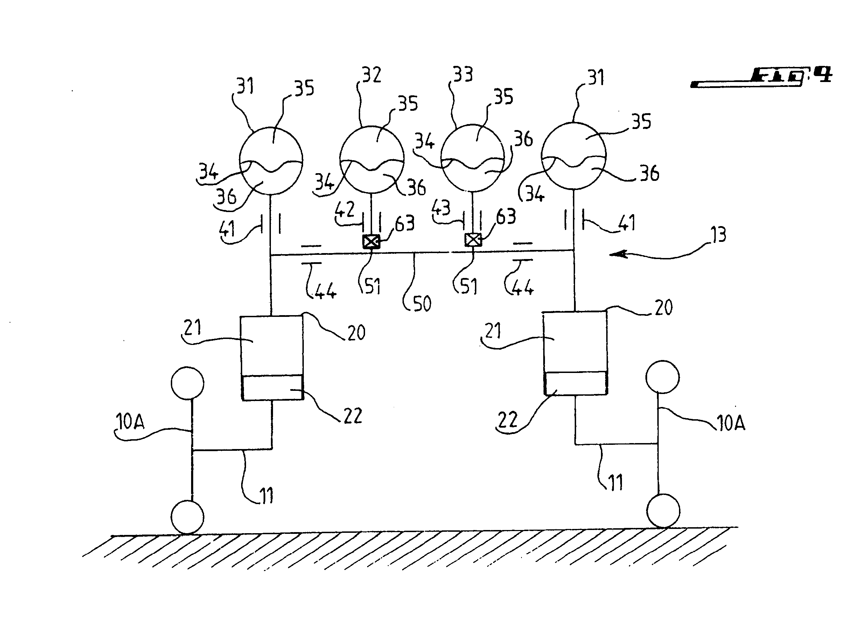

Dans la variante de réalisation de la figure 4, le dispositif d'amortissement 13 comprend à l'avant et à l'arrière deux troisièmes organes d'isolement sélectifs 63 disposés respectivement entre les deuxième et troisième dispositifs d'amortissement 42 et 43 et les points de connexion 51 sur le conduit 50 correspondant.

Ces troisièmes organes d'isolement 63 permettent sélectivement de mettre en communication ou d'isoler les deuxième et troisième accumulateurs 32 et 33 avec les vérins 20 des deux roues.

Un seul des deux accumulateurs ou les deux accumulateurs peuvent être isolés.

Ces troisièmes organes d'isolement 63 sont par exemple des électrovannes tout ou rien.

Ces différents types d'organes d'isolement peuvent être combinés au sein d'un même dispositif de suspension.

Les premier et/ou deuxièmes et/ou troisièmes organes d'isolement peuvent être pilotés par un calculateur en fonction de mesures faites par des capteurs, par exemple la vitesse de lacet, l'accélération longitudinale ou l'accélération transversale.

On peut alors faire commuter le dispositif de suspension entre différentes configurations de façon à :
1/ permettre d'augmenter la raideur en roulis dans les virages (avec les variantes des figures 2, 3 et 4),
2/ permettre de moduler les raideurs avant et arrière pour limiter les phénomènes de plongée et de cabrage en cas de freinage ou d'accélération brusque, en coupant ou en reconnectant les deuxième et troisième accumulateurs (avec les variantes des figures 3 et 4),
3/ permettre l'amélioration de l'amortissement en fonction du type de sollicitation sur les roues (avec les variantes des figures 2, 3 et 4).

On comprend donc bien que le véhicule de l'invention présente un dispositif de suspension particulièrement avantageux, permettant, à l'aide d'un petit nombre d'accumulateurs et de dispositifs d'amortissement, d'offrir un excellent rapport confort/tenue de caisse pour tous les types de sollicitation des roues.

Le dispositif de suspension répond de façon adaptée aux différents types de sollicitations, sans mettre en oeuvre un dispositif de commande électronique ou un calculateur.

Le mérite de l'invention est d'avoir compris que le générateur d'effort idéal décrit dans le préambule pouvait être appliqué en ne mettant en oeuvre qu'un petit nombre d'accumulateurs.

Le dispositif de suspension est donc compact et peut facilement être logé à bord du véhicule, en particulier quand les roues d'un même essieu partagent plusieurs accumulateurs.

Ce dispositif est également robuste car les différents éléments qui le composent (accumulateurs, dispositifs d'amortissement, vérins) sont connus et largement éprouvés, et car il ne fait pas appel pour son fonctionnement à des dispositifs de commande électroniques. Dans la version de base, il est insensible aux défaillances du réseau électrique du véhicule.

Ce dispositif de suspension est beaucoup plus simple que la suspension décrite dans le document de brevet FR 2 569 624, qui met en oeuvre trois accumulateurs par essieu, deux régulateurs à tiroir et un dispositif de commande électronique.

Cette suspension ne permet pas une auto-adaptation de la réponse de la suspension en fonction du type sollicitation subie par les roues. Elle permet seulement d'augmenter ou de diminuer l'amortissement sur commande d'un dispositif électronique, actionné directement par le conducteur ou en fonction de mesures effectuées par des capteurs.

Le dispositif de suspension de l'invention est peu coûteux, car il met en jeu un petit nombre d'équipements, et n'est pas commandé par un dispositif électronique dans sa version de base représentée sur la figure 1.

Dans les variantes plus sophistiquées représentées sur les figures 2 à 4, il est possible de commuter entre différents modes de fonctionnement du dispositif de suspension pour répondre à des sollicitations brutales du conducteur, telles que freinage brusque, accélération brusque ou virage très raide à grande vitesse.

Enfin, si la description ci-dessus a été faite dans le cas où les deux essieux avant et arrière du véhicule sont équipés d'un dispositif de suspension conforme à l'invention, il est tout à fait envisageable de ne monter le dispositif que sur un seul essieu (par exemple à l'arrière où les variations de charge sont les plus importantes).

## Revendications

1. Véhicule automobile comprenant deux roues avant et deux roues arrière (10A, 10R) montées sur des supports de roues respectifs (11), une caisse, et un dispositif de suspension oléopneumatique (13) interposé entre les supports de roue (11) et la caisse, ce dispositif transmettant un effort à la caisse en réponse aux sollicitations subies par les roues (10A, 10R), le dispositif de suspension (13) comprenant pour chaque roue (10A, 10R) d'au moins un essieu un vérin (20), une pluralité d'accumulateurs oléopneumatiques (31,32,33) d'élasticités respectives mutuellement différentes, et une pluralité de dispositifs d'amortissement (41,42,43) de capacités d'amortissement respectives mutuellement différentes, chacun associé à un accumulateur (31,32,33) et interposé entre ledit accumulateur et le vérin (20), ce vérin (20) comprenant une chambre (21) et un piston (22) lié au support de roue (11) se déplaçant dans la chambre (21), la chambre (21) étant hydrauliquement reliée à chacun des accumulateurs (31,32,33) à travers les dispositifs d'amortissement (41,42,43), **caractérisé en ce que** le dispositif de suspension (13) comprend de trois à quatre accumulateurs (31,32,33) par roue dudit essieu sans que le nombre total d'accumulateurs n'excède quatre pour les deux roues d'un même essieu grâce à des accumulateurs communs aux deux roues, les élasticités de ces accumulateurs (31,32,33) et les capacités d'amortissement des dispositifs d'amortissement (41,42,43) associés auxdits accumulateurs étant choisies de façon à permettre l'auto-adaptation de la réponse du dispositif de suspension (13) en fonction du type de sollicitation subie par les roues (10A, 10R), sans nécessiter l'intervention de moyens de commande électroniques.

2. Véhicule automobile selon la revendication 1, **caractérisé en ce que** le dispositif de suspension (13) comprend trois accumulateurs (31, 32, 33) par roue (10A, 10R).

3. Véhicule automobile selon la revendication 2, **caractérisé en ce que** le dispositif de suspension (13) comprend pour chaque roue (10A, 10R) des premier, deuxième et troisième accumulateurs (31, 32, 33) associés à des premier, deuxième et troisième dispositifs d'amortissement (41, 42, 43), les deuxième et troisième accumulateurs (32, 33) et les deuxième et troisième dispositifs d'amortissement (42, 43) des deux roues de l'essieu étant communs.

4. Véhicule automobile selon la revendication 3, **caractérisé en ce que** les premier, deuxième et troisième accumulateurs (31, 32, 33) d'une même roue présentent des première, deuxième et troisième élasticités croissantes dans cet ordre, les capacités d'amortissement des premier, deuxième et troisième dispositifs d'amortissement (41, 42, 43) d'une même roue étant croissantes dans cet ordre.

5. Véhicule automobile selon la revendication 3 ou 4, **caractérisé en ce que** le dispositif de suspension (13) comprend pour chaque roue (10A, 10R) un quatrième dispositif d'amortissement (44) interposé entre le vérin (20) et les deuxième et troisième dispositifs d'amortissement (42, 43).

6. Véhicule automobile selon la revendication 5 en combinaison avec la revendication 3, **caractérisé en ce que** le quatrième dispositif d'amortissement (44) présente une capacité d'amortissement inférieure à la capacité d'amortissement du deuxième dispositif d'amortissement (42) et supérieure à la capacité d'amortissement du premier dispositif d'amortissement (41).

7. Véhicule automobile selon la revendication 5 ou 6, **caractérisé en ce que** les chambres (21) des vérins (20) des deux roues de l'essieu sont mises en communication par un conduit (50) traversant les quatrièmes dispositifs d'amortissement.

8. Véhicule automobile selon la revendication 7, **caractérisé en ce que** les deuxième et troisième accumulateurs (32, 33) des roues de l'essieu sont respectivement raccordés à des points de connexion (51) du conduit (50) à travers les deuxième et troisième dispositifs d'amortissement (42, 43), ces points de connexion (51) étant disposés entre les quatrièmes dispositifs d'amortissement (44) traversés par ledit conduit.

9. Véhicule automobile selon la revendication 8, **caractérisé en ce que** le dispositif d'amortissement (13) comprend sur le conduit (50) un premier organe d'isolement (61) disposé entre les points de connexion (51), ce premier organe d'isolement (61) permettant sélectivement de mettre en communication ou d'isoler les chambres (21) des vérins (20) des roues de l'essieu l'une de l'autre.

10. Véhicule automobile selon la revendication 8 ou 9, **caractérisé en ce que** le dispositif d'amortissement (13) comprend sur le conduit (50) deux seconds organes d'isolement sélectifs (62), disposés aux deux extrémités opposées du conduit (50), entre les points de connexion (51) et les vérins (20).

11. Véhicule automobile selon l'une quelconque des revendications 8 à 10 **caractérisé en ce que** le dispositif d'amortissement (13) comprend deux troisièmes organes d'isolement sélectifs (63) disposés respectivement entre les deuxième et troisième dispositifs d'amortissement (42, 43) et les points de connexion (51) sur le conduit (50).

## Claims

1. A motor vehicle comprising two front wheels and two rear wheels (10A, 10R) mounted to respective wheel supports (11), a body shell, and a hydropneumatic suspension device (13) interposed between the wheel supports (11) and the body shell, such device transmitting a stress to the body shell in response to the restraints undergone by the wheels (10A, 10R), the suspension device (13) comprising for each wheel (10A, 10R) of at least one axle, an actuator cylinder (20), a plurality of hydropneumatic accumulators (31, 32, 33) having mutually different respective elasticities, and a plurality of shock absorbing devices (41, 42, 43) having mutually different respective abilities to absorb shocks, each being associated with an accumulator (31, 32, 33) and interposed between said accumulator and the actuator cylinder (20), such actuator cylinder (20) comprising a chamber (21) and a piston (22) linked to the wheel support (11) moving in the chamber (21), the chamber (21) being hydraulically connected to each of the accumulators (31, 32, 33) through the shock absorbing devices (41, 42, 43), **characterized in that** said suspension device (13) comprises three to four accumulators (31, 32, 33) per wheel of said axle, with the total number of accumulators not exceeding four for both wheels of a same axle thanks to accumulators being shared by both wheels, the elasticities of these accumulators (31, 32, 33) and the abilities to absorb shocks of the shock absorbing devices (41, 42, 43) associated with said accumulators being selected so that the suspension device (13) is able itself to adapt its response according to the type of restraint undergone by the wheels (10A, 10R), without needing the intervention of any electronic control means.

2. The motor vehicle according to claim 1, **characterized in that** the suspension device (13) comprises three accumulators (31, 32, 33) per wheel (10A, 10R).

3. The motor vehicle according to claim 2, **characterized in that** the suspension device (13) comprises, for each wheel (10A, 10R), first, second and third accumulators (31, 32, 33) associated with first, second and third shock absorbing devices (41, 42, 43), the second and third accumulators (32, 33) and the second and third shock absorbing devices (42, 43) for both axle wheels being shared.

4. The motor vehicle according to claim 3, **characterized in that** the first, second and third accumulators (31, 32, 33) of a same wheel have first, second and third elasticities increasing in this order, the abilities to absorb shocks of a first, second and third shock absorbing devices (41, 42, 43) of the same wheel increasing in this order.

5. The motor vehicle according to claim 3 or 4, **characterized in that** the suspension device (13) comprises for each wheel (10A, 10R), a fourth shock absorbing device (44), interposed between the actuator cylinder (20) and the second and third shock absorbing devices(42, 43).

6. The motor vehicle according to claim 5 in combination with claim 3, **characterized in that** the fourth shock absorbing device (44) has an ability to absorb shocks lower than the ability to absorb shocks of the second shock absorbing device (42)and greater than the ability to absorb shocks of the first shock absorbing device (41).

7. The motor vehicle according to claim 5 or 6, **characterized in that** the chambers (21) of the actuator cylinders (20) of both axle wheels communicate via a pipe (50) which crosses the fourth shock absorbing devices.

8. The motor vehicle according to claim 7, **characterized in that** the second and third accumulators (32, 33) of the axle wheels are connected respectively to points of connection (51) of the pipe (50) through the second and third shock absorbing devices (42, 43), these points of connection (51) being arranged between the fourth shock absorbing devices (44) crossed by said pipe.

9. The motor vehicle according to claim 8, **characterized in that** the suspension device (13) carries on the pipe (50), a first isolating device (61) arranged between the points of connection (51), this first isolating device (61) allowing the chambers (21) of the actuator cylinders (20) of the axle wheels to be selectively put in communication with or isolated from each other.

10. The motor vehicle according to claim 8 or 9, **characterized in that** the suspension device (13) carries on the pipe (50) two second selective isolating devices, arranged at both opposite ends of the pipe (50), between the points of connection (51) and the actuator cylinders (20).

11. The motor vehicle according to any of claims 8 to 10, **characterized in that** the suspension device (13) two third selective isolating devices respectively arranged between the second and third shock absorbing devices(42, 43) and the points of connection (51) on the pipe (50).

## Patentansprüche

1. Kraftfahrzeug, das zwei vordere und zwei hintere Räder (10A, 10R) aufweist, die auf den entsprechenden Radauflagen (11) montiert sind, einen Kasten und eine oleopneumatische Aufhängungsvorrichtung (13), die zwischen den Radauflagen (11) und dem Kasten angeordnet ist, wobei diese Vorrichtung in Antwort auf die Beanspruchungen, die auf die Räder (10A, 10R) wirken, eine Kraft an den Kasten überträgt, wobei die Aufhängungsvorrichtung (13) für jedes Rad (10A, 10R) mindestens einer Achse einen Zylinder (20) umfasst, eine Vielzahl von oleopneumatischen Akkumulatoren (31, 32, 33) mit jeweils verschiedenen entsprechenden Elastizitäten und eine Vielzahl von Dämpfungsvorrichtungen (41, 42, 43) mit jeweils verschiedenen entsprechenden Dämpfungsvermögen, wobei jede einem Akkumulator (31, 32, 33) zugeordnet und zwischen dem Akkumulator und dem Zylinder (20) angebracht ist, wobei dieser Zylinder (20) eine Kammer (21) und einen Kolben (22) umfasst, der mit der Radauflage (11) verbunden ist und sich in der Kammer (21) verschiebt, wobei die Kammer (21) hydraulisch mit jedem der Akkumulatoren (31, 32, 33) über die Dämpfungsvorrichtungen (41, 42, 43) verbunden ist, **dadurch gekennzeichnet, dass** die Aufhängungsvorrichtung (13) zwischen drei und vier Akkumulatoren (31, 32, 33) pro Rad der Achse umfasst, ohne dass die Gesamtzahl von Akkumulatoren vier für die zwei Räder derselben Achse dank gemeinsam genutzter Akkumulatoren der zwei Räder übersteigt, wobei die Elastizitäten dieser Akkumulatoren (31, 32, 33) und die Dämpfungsvermögen der Dämpfungsvorrichtungen (41, 42, 43), die den Akkumulatoren zugeordnet sind, so gewählt werden, dass sie die automatische Anpassung der Antwort der Aufhängungsvorrichtung (13) je nach der Art der Beanspruchung, die auf die Räder (10A, 10R) wirkt, ermöglichen, ohne die Mitwirkung von elektronischen Steuermitteln zu erfordern.

2. Kraftfahrzeug nach Anspruch 1, **dadurch gekennzeichnet, dass** die Aufhängungsvorrichtung (13) drei Akkumulatoren (31, 32, 33) pro Rad (10A, 10R) umfasst.

3. Kraftfahrzeug nach Anspruch 2, **dadurch gekennzeichnet, dass** die Aufhängungsvorrichtung (13) für jedes Rad (10A, 10R) erste, zweite und dritte Akkumulatoren (31, 32, 33) umfasst, die ersten, zweiten und dritten Dämpfungsvorrichtungen (41, 42, 43) zugeordnet sind, wobei die zweiten und dritten Akkumulatoren (32, 33) und die zweiten und dritten Dämpfungsvorrichtungen (42, 43) der beiden Räder der Achse gemeinsam genutzt werden.

4. Kraftfahrzeug nach Anspruch 3, **dadurch gekennzeichnet, dass** die ersten, zweiten und dritten Akkumulatoren (31, 32, 33) desselben Rades erste, zweite und dritte in dieser Reihenfolge zunehmende Elastizitäten aufweisen, wobei die Dämpfungsvermögen der ersten, zweiten und dritten Dämpfungsvorrichtungen (41, 42, 43) desselben Rades in dieser Reihenfolge zunehmen.

5. Kraftfahrzeug nach Anspruch 3 oder 4, **dadurch gekennzeichnet, dass** die Aufhängungsvorrichtung (13) für jedes Rad (10A, 10R) eine vierte Dämpfungsvorrichtung (44) umfasst, die zwischen dem Zylinder (20) und den zweiten und dritten Dämpfungsvorrichtungen (42, 43) angeordnet ist.

6. Kraftfahrzeug nach Anspruch 5 in Kombination mit Anspruch 3, **dadurch gekennzeichnet, dass** die vierte Dämpfungsvorrichtung (44) ein niedrigeres Dämpfungsvermögen als das Dämpfungsvermögen der zweiten Dämpfungsvorrichtung (42) und ein höheres Dämpfungsvermögen als die erste Dämpfungsvorrichtung (41) aufweist.

7. Kraftfahrzeug nach Anspruch 5 oder 6, **dadurch gekennzeichnet, dass** die Kammern (21) der Zylinder (20) der beiden Räder der Achse durch eine Leitung (50) verbunden werden, die die vierten Dämpfungsvorrichtungen durchquert.

8. Kraftfahrzeug nach Anspruch 7, **dadurch gekennzeichnet, dass** die zweiten und dritten Akkumulatoren (32, 33) der Räder der Achse jeweils mit Anschlusspunkten (51) der Leitung (50) durch die zweiten und dritten Dämpfungsvorrichtungen (42, 43) angeschlossen sind, wobei diese Anschlusspunkte (51) zwischen den vierten Dämpfungsvorrichtungen (44) angeordnet sind, die von der genannten Leitung durchquert werden.

9. Kraftfahrzeug nach Anspruch 8, **dadurch gekennzeichnet, dass** die Aufhängungsvorrichtung (13) in der Leitung (50) ein erstes Absperrorgan (61) umfasst, das zwischen den Anschlusspunkten (51) angeordnet ist, wobei es dieses erste Absperrorgan (61) selektiv ermöglicht, die Kammern (21) der Zylinder (20) der Räder der Achse miteinander zu verbinden oder voneinander zu trennen.

10. Kraftfahrzeug nach Anspruch 8 oder 9, **dadurch gekennzeichnet, dass** die Aufhängungsvorrichtung (13) in der Leitung (50) zwei zweite selektive Absperrorgane (62) umfasst, die an den beiden entgegengesetzten Enden der Leitung (50) zwischen den Anschlusspunkten (51) und den Zylindern (20) angeordnet sind.

11. Kraftfahrzeug nach einem der Ansprüche 8 bis 10, **dadurch gekennzeichnet, dass** die Aufhängungsvorrichtung (13) zwei dritte selektive Absperrorgane (63) umfasst, die jeweils zwischen den zweiten und dritten Dämpfungsvorrichtungen (42, 43) und den Anschlusspunkten (51) in der Leitung (50) angeordnet sind.
